(19) Europäisches Patentamt
European Patent Office
Office européen des brevets

(11) **EP 2 517 367 B1**

(12) **EUROPEAN PATENT SPECIFICATION**

(45) Date of publication and mention of the grant of the patent:
**31.05.2017 Bulletin 2017/22**

(21) Application number: **10810978.6**

(22) Date of filing: **15.12.2010**

(51) Int Cl.:
*H04B 7/024* (2017.01)   *H04B 7/0452* (2017.01)
*H04B 7/06* (2006.01)   *H04W 72/08* (2009.01)

(86) International application number:
**PCT/IB2010/055823**

(87) International publication number:
**WO 2011/077320 (30.06.2011 Gazette 2011/26)**

(54) **RATE ALLOCATION SCHEME FOR COORDINATED MULTIPOINT TRANSMISSION**

RATENZUWEISUNGSSCHEMA FÜR KOORDINIERTE MEHRPUNKTÜBERTRAGUNG

SCHÉMA D'ALLOCATION DE DÉBIT POUR UNE TRANSMISSION MULTIPOINT COORDONNÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2009 US 645814**

(43) Date of publication of application:
**31.10.2012 Bulletin 2012/44**

(73) Proprietor: **Telefonaktiebolaget LM Ericsson (publ)**
**164 83 Stockholm (SE)**

(72) Inventor: **HAFEEZ, Abdulrauf**
**Cary**
**NC 27513 (US)**

(74) Representative: **Brann AB**
**P.O. Box 3690**
**Drottninggatan 27**
**103 59 Stockholm (SE)**

(56) References cited:
EP-A1- 1 087 545    EP-A1- 1 863 248
EP-A2- 1 508 992    US-A1- 2007 218 950
US-A1- 2008 159 122    US-A1- 2009 253 380
US-A1- 2009 296 650

- **MOTOROLA: "SCF-based Coordinated Beamforming and Performance Gain over Single-Point SU/MU Beamforming", 3GPP DRAFT; R1-094848 SCF BASED COBF AND RESULTS -FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Jeju; 20091109, 9 November 2009 (2009-11-09), XP050389236, [retrieved on 2009-11-03]**
- **SEAN A RAMPRASHAD ET AL: "Cellular vs. Network MIMO: A comparison including the channel state information overhead", IEEE 20TH INTERNATIONAL SYMPOSIUM ON PERSONAL, INDOOR AND MOBILE RADIO COMMUNICATIONS (PIMRC 2009), IEEE, PISCATAWAY, NJ, USA, 13 September 2009 (2009-09-13), pages 878-884, XP031659886, ISBN: 978-1-4244-5122-7**
- **MOTOROLA: "CoMP Operation and Evaluation", 3GPP DRAFT; R1-091935 COMP EVAL METHOD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050339413, [retrieved on 2009-04-28]**

**Description**

**BACKGROUND**

Wireless cellular communication networks are nearly ubiquitous, and provide mobile voice and data communications to millions of subscribers, In a cellular network, a fixed transceiver, or Access Point (AP), provides two-way radio communications with a plurality of subscribers within a geographic area, or cell. In modern wireless cellular communication networks, inter-cell interference, or interference at User Equipment (UE) from non-serving APs, remains the dominant source of performance impairment, restricting data rates, system capacity, and the quality of delivered communication services. Similar interference occurs when transmitting from multiple antennas at a single AP to multiple UEs.

A system of joint adaptive beamforming from a multi-antenna AP to multiple UEs is disclosed in the paper by M. Schubert and H. Boche titled, "Solution of the multiuser beamforming problem with individual SINR constraints," published in the IEEE Trans. VT, vol. 53, no. 1, Jan. 2004. According to this system, the beamformers and transmission powers are jointly adjusted to fulfill individual average Signal-to-Interference-plus-Noise Ratio (SINR) requirements at the UEs. An algorithm is derived that maximizes the jointly-achievable SINR margin (over the SINR requirements) under sum transmit power constraint.

Coordinated Multi-Point (CoMP) transmission is a system architecture to minimize interference between multiple APs. CoMP differs from a conventional cellular architecture in that antennas at various APs in a geographical location are connected to a central CoMP controller by means of a fast backhaul. The CoMP controller minimizes interference by coordinating scheduling of transmissions to user equipment (UE) within the cells, and/or actively suppressing interference using signal processing techniques. In CoMP signal processing, transmissions to each UE, from each transmitting antenna, are weighted to minimize interference and maximize throughput. This coordinated transmission from multiple APs in the downlink allows CoMP systems to achieve very high spectral efficiencies, compared to conventional cellular networks. CoMP systems are disclosed in the paper by G. J. Foschini, K. Karakayali, and R. A. Valenzuela, titled "Coordinating multiple antenna cellular networks to achieve enormous spectral efficiency," published in the IEE Proc.-Commun., vol. 153, issue 4, pp. 548-555, August 2006, and in the 3GPPP specification "Coordinated multipoint transmission/reception," TSG-RAN WG1 #53bis, R1-082469, Warsaw Poland, Jun. 30, 2008.

A system of joint adaptive beamforming from multiple APs in a CoMP cell is disclosed in U.S. Provisional Patent Application Ser. No. 61/094,108 by A. Hafeez, filed September 2008, titled "Multiuser beamforming under per transmitter power constraints," later published as US-A1-2010-0056140. An algorithm is derived that maximizes the jointly-achievable SINR margin for the UEs in a CoMP cell under per-transmitter (i.e., AP) power constraints.

The multiuser beamforming schemes disclosed by Schubert, et al. and Hafeez maximize the jointly-achievable SINR margin over the individual SINR targets for the UEs. These approaches, however, do not address the problem of setting the individual SINR targets for the UEs. Practical considerations, such as UE quality of service (QoS) requirements and traffic conditions come into play in determining these targets. Moreover, system aspects, such as fairness and throughput optimization must also be considered.

Multiuser beamforming with equal UE SINR targets does not guarantee equal bit rates for the UEs. This is because with equal UE SINR targets, the multiuser beamforming algorithms equalize the average SINRs for the UEs scheduled in the given frame, without regard to the bit rates achieved by the UEs in past frames. In other words, scheduling, which is done independently of the beamforming scheme, affects the average UE bit rates.

Setting equal UE bit rate targets is generally not good for system throughput as UEs with favorable channel conditions are penalized, while UEs with unfavorable channel conditions are rewarded. On the other hand, setting UE bit rate targets based on their channel conditions alone (e.g., SINR) may result in gross unfairness among UEs. For example, UEs in poor channel conditions will receive only a low bit rate for extended periods. Similarly, providing high bit rates to UEs in good channel conditions improves system throughput, but is unfair over the long term.

EP-A1-1 863 248 discloses a mechanism to incorporate quality of service constraints imposed by higher layers into the allocation of resources performed preferably in a multi-user-multi-carrier MIMO system. Quality of service constraints are given as fractions of rates that each user should obtain out of the resulting sum rate. Allocation of spatial and frequency dimensions is carried out according to the cooperative zero-forcing with successive encoding and successive allocation methods (CZF-SESAM). The approach basically constitutes a means of forming allocation in each iteration of the CZF-SESAM taking into account prescribed quality of service constraints. The procedure consists of three basic steps. After all potential beam-forming vectors have been computed on each subcarrier at a certain iteration, first, preferably for each user, only the beam-forming vector is on each subcarrier selected that yields the highest channel gain. In the second step, considering the subchannel selected in the first step, capacity values are computed for every user and based on these capacity values and the quality of service constraints, the spectral share of each user is computed. Finally, the particular assignation of space-frequency dimensions is carried out by departing from a sum rate optimum allocation and modifying the initial allocation according to a minimum energy loss principle, in order to comply the spectral shares computed in a second step.

US-A1-2008/0159122 discloses techniques for efficiently optimizing scheduling and beamforming in an OFDMA-based wireless network that uses SDMA. The techniques are capable of achieving a high level of spectral efficiency and throughput in a low complexity manner while still addressing quality of service (QoS) constraints.

US-A1-2009/0296650 discloses system and methods for optimizing wireless communication for a plurality of mobile wireless devices. The system uses beamforming vectors or precoders having a structure optimal with respect to the weighted sum rate in a multi-cell orthogonal frequency division multiple access (OFDMA) downlink. A plurality of base stations communicate with the mobile devices and all base stations perform a distributed non-convex optimization exploiting the determined structure.

US 2007/0218950 discloses optimizing beamforming configurations and transmit power allocation configurations in a telecommunication system comprising a base station and a plurality of user entities. The base station and the user entities are capable of multiple-input multiple-output (MIMO) communications, i.e. capable of communicating through spatial subchannels. The base station calculates iteratively optimal beamforming configurations for the base station and for each user entity and transmit power allocation configurations for each spatial subchannel used in MIMO communications.; The base station carries out the calculation on the basis of channel state information received from the user entities by utilizing the information on correlation of different spatial subchannels, i.e. interference between the subchannels, in order to update beamforming configurations and transmit power allocation configurations.

Motorola in "SCF-based Coordinated Beamforming and Performance Gain over Single-Point SU/MU Beamforming" disclose enabling eNBs to dynamically switch between different MIMO modes like SU/MU and to further enable CoMp transmission through interference avoidance or joint transmission in UE agnostic manner. They give maximum flexibility to the eNB schedulers to optimize performance under different user channel conditions and network conditions. Individually optimized feedback configurations for different hypothesis like MIMO modes. MIMO transmission rank, CoMP transmission sets, require some UE knowledge of the transmission hypothesis. Depending on the transmission mode, the feedback may have to be based on channel from each UE to potentially all the cells in the measurement set. Semi-static configuration of feedback modes could result in scheduling constraints in individual cells over a period of time, limiting CoMP gains and application. An iterative scheduler has an initialization step, the scheduler determines the SU/MU-MIMO mode and the corresponding precoding matrices assuming no coordination. For example, this could be based on maximizing the predicted sum rate. At each subsequent iteration, the set of UEs selected in the previous iteration are treated as tentative UEs.

EP-A2-1 508 992 discloses a multiuser Multiple Input Multiple Output (MIMO) radio communication system, in which a transmitter receives channel quality information transmitted from receivers, schedules resource for the receivers within a corresponding scheduling epoch based on the received channel quality information. Thereafter, the transmitter pre-codes signals to be transmitted to the resource-scheduled receivers in a predetermined coding method before transmission, thereby maximizing system transmission efficiency.

US-A1-2009/0253380 discloses a method for beamforming by a transmission device in a multiantenna multiuser communication system. The method includes grouping codebook indexes included in a codebook into codebook index combinations, and calculating a sum of transmission rate for each of the codebook index combinations; selecting a codebook index combination with a maximum sum of transmission rate as an optimal codebook index combination; and transmitting a codebook index corresponding to a particular reception device among codebook indexes included in the optimal codebook index combination, to the particular reception device.

Sean A. Ramprashad and Giuseppe Caire in "Cellular vs. Network MIMO: A Comparison including the Channel State Information Overhead" disclose cellular architectures, using coordinated allocated antennas. In MU-MIMO and Scheduling, the user set and power allocation are selected to maximize the scheduling criterion. The selection is made according to PFS by solving a weighted sum-rate maximization problem based on the nominal rates.

SUMMARY

The present invention provides an iterative method of allocating data transmission rates to multiple users from multiple antennas in a wireless communications network as set out in claim 1.

BRIEF DESCRIPTION OF THE DRAWINGS

FIG. 1 is a functional block diagram of a CoMP wireless communication network.
FIG. 2 is a flow diagram of a method of allocating data rates among multiple users from multiple antennas in a CoMP network.
FIG. 3 is a graph depicting the results of simulation of a CoMP network.

DETAILED DESCRIPTION

In the following, there is described data transmission rates being allocated over scheduled users by varying the weights assigned to the users. The user weights determine the transmission precoding vectors used for the transmissions, which determine the data rates. There is described, a set of predetermined weights is selected from a plurality of sets of weights as the one maximizing the sum, over all scheduled users, of the ratio of each user's instantaneous data rate to the average rate over prior frames. There is also described, the weights, precoding vectors, and data rates are frequency-specific. There is also described, the user weights are determined through an iterative process of assigning initial weights, determining the precoding vectors associated with the weights, determining the channel conditions for transmission using the determined precoding vectors, and adjusting the user weights based on their relative channel conditions.

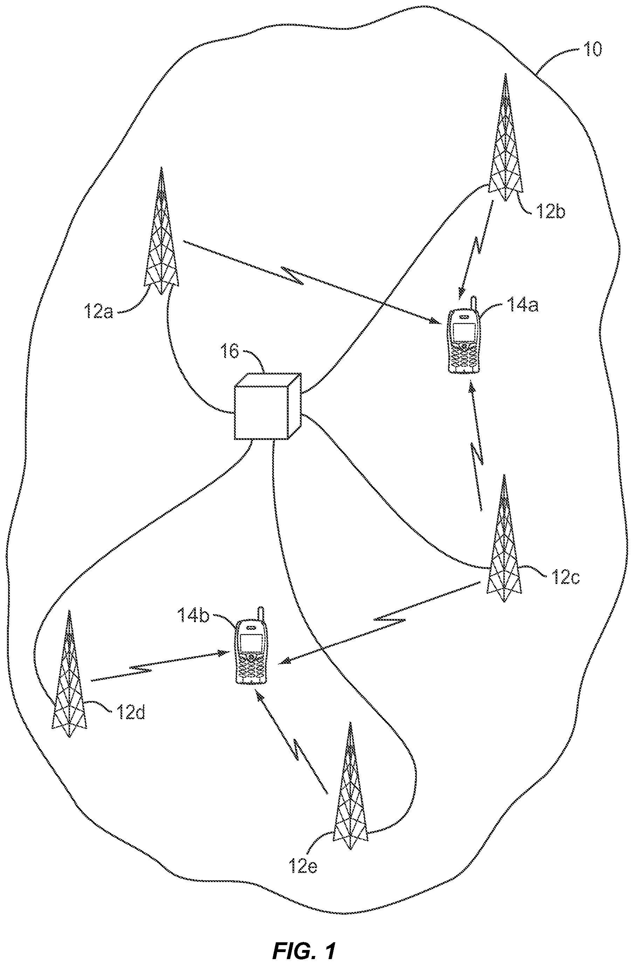

FIG. 1 depicts a CoMP wireless communication network 10. The network 10 includes a plurality of AP antennas 12a-12e. Although depicted as a single antenna 12 per AP tower, in other embodiments, an AP may have multiple co-located antennas 12. The AP antennas 12 transmit communication signals on the downlink to a plurality of UEs 14a-14b. The AP antennas 12 are all connected to a central CoMP controller 16, which coordinates both scheduling and transmission parameters among the AP antennas 12 to control interference at the UEs 14. As depicted in FIG. 1, the CoMP controller 16 coordinates the transmissions from AP antennas 12a, 12b, and 12c to UE 14a, weighting the transmissions, for example to maximize the SINR at UE 14a. Similarly, the CoMP controller 16 coordinates the transmissions from AP antennas 12c, 12d, and 12e to UE 14b. Of course, the CoMP controller 16 can be considered to control transmissions from all CoMP antennas 12 to each UE 14, although in practical implementations, many of these transmission paths will be given weights of zero, effectively eliminating them.

Downlink multiuser transmission schemes in CoMP networks 10 are generally designed to maximize either the sum user throughput (bit rate) or the minimum user throughput. To give different users different priorities, user throughputs may be weighted. Moreover, other metrics may be used instead of throughput, such as the SINR or the mean square error (MSE).

Let there be J sets of weights for the users scheduled for transmission in a current frame (i.e., a predetermined temporal duration). Assume that the weight sets are fixed and predetermined. Let $\underline{\mu}(j) = [\mu_1(j)\ \mu_2(j)\ \Lambda\ \mu_K(j)]$ be the $j$-th weight set for users $1,2,...K$ scheduled for downlink transmissions in the current frame. Let $V(j)$ be the transmission precoding vectors specifying transmit antenna coefficients according to a multiuser transmission scheme corresponding to the $j$-th weight set. Let $\underline{r}(j)$ be the user rates in the current frame if the precoding vectors $V(j)$ were used for transmission. Let $\underline{r}_{avg}(j)$ be estimates of the average rates for the same users in recent past frames. The average user rates may be obtained by filtering or smoothing the instantaneous (per frame) user rates, e.g., over two or more prior frames.

According to one embodiment, the weight set $j_0$ is selected as

$$j_0 = \arg\max_{j} \sum_{k=1}^{K} \frac{r_k(j)}{r_{k,avg}(j)} \tag{1}$$

and the corresponding set of precoding vectors $V(j_0)$ is selected and used for transmission.

In a coherent multiuser transmission scheme, the transmission precoding vectors $V(j,f)$ are frequency-specific (or specific to a frequency band). In this case, the user weights $\underline{\mu}(j,f)$ are also frequency-specific. Let $\underline{r}(j,f)$ be the user rates for frequency $f$ in the current frame if the precoding victors $V(j,f)$ were used for transmission. Let $\underline{r}_{avg}(j,f)$ be estimates of the average rates for frequency $f$ for the same users in recent past frames.

According to another embodiment, the weight set $j_0(f)$ is selected for frequency $f$ as

$$j_0(f) = \arg\max_{j} \sum_{k=1}^{K} \frac{r_k(j,f)}{r_{k,avg}(j,f)} \tag{2}$$

and the corresponding set of precoding vectors $V(j_0(f),f)$ is selected and used for transmission.

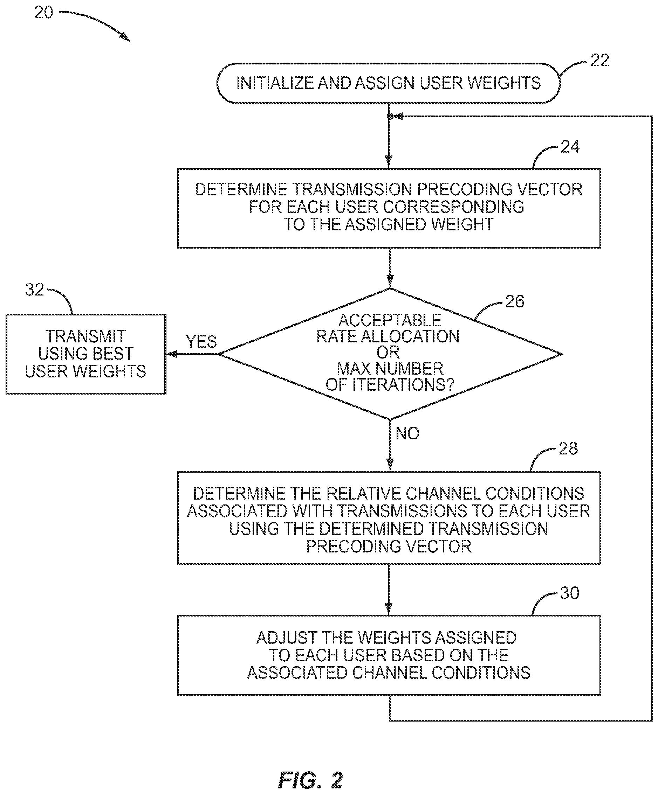

In another embodiment, user weights are determined according to user channel conditions. Note that user channel conditions are coupled to each other in a multiuser channel. Therefore, we use an iterative method 20, depicted in Figure 2. An initial set of weights is selected and assigned to users (block 22). In one embodiment, the initial weights are equal among all users. The transmission precoding vectors corresponding to the assigned (i.e., initial) user weights are determined (block 24). For the first iteration, the decision block 26 is traversed, and the relative channel conditions associated with transmission to the users, using the selected transmission precoding vectors, are determined (block 28). The channel conditions may be indicated by metrics such as achieved data rates, SINRs, MSEs, etc. The user weights are adjusted based on the relative channel conditions (block 30). For example, weights may be raised for users in favorable channel conditions, weights may be lowered for users in unfavorable channel conditions, or both. In comparing users' channel conditions, the channel condition metrics associated with a user may be compared to predetermined threshold values. Alternatively, since it is the relative channel conditions among the users that is important, a user's channel condition metrics may be compared to channel condition metrics associated with other users. The transmission precoding vectors corresponding to the new weights are determined (block 24). If a predetermined number of iterations have been performed, or if a metric, such as the sum of weighted user throughputs, exceeds a predetermined threshold (block 26), then data is transmitted to the scheduled users during the current frame using the best weights, where the best weights are the weights that obtain the highest weighted sum user throughput. Alternatively, the method 100 iterates again (blocks 28, 30, 24).

System-level simulations were conducted to quantify the benefits of embodiments of the invention. A macro-cellular urban environment corresponding to 3GPP Case 1 was considered. See 3GPP TR 25.814, "Physical layer aspects for evolved Universal Terrestrial Radio Access (UTRA)," V7.1.0, September 2006. A network of three CoMP cells comprising nine subcells (120 degree sectors) was simulated. The inter-site distance was 500 m. Full-buffer traffic and 3 km/hr UE speed was assumed. In the simulation, UEs were equipped with one antenna while APs were equipped with four-element antenna arrays with an inter-element spacing of $0.5\lambda$ Round robin UE scheduling based on a fixed grid of (four) beams was assumed. Practical modulation/coding and link adaptation was used. Carrier frequency was 2 GHz and channel bandwidth was 9 MHz.

The multiuser transmission scheme simulated is multiuser beamforming (per the Hafeez provisional patent application cited above), which jointly adapts the beamforming weights and transmit powers for the scheduled users in a CoMP cell to maximize the jointly-achievable average UE SINR margin, where the average is taken over all frequencies. The SINR margin is defined as the ratio of the average SINR to the SINR target for each UE. The jointly-achievable SINR margin is the SINR margin that can be achieved by all UEs. The method 20 of FIG. 2 was simulated, where the initial UE SINR targets (user weights) are set to be equal (to a nominal value). After each iteration (j) of the multiuser beamforming algorithm, the SINR targets are adapted as

$$\mu_k(j+1) = \mu_k(j)\frac{P_{max}}{P_k(j)}$$

where $p_k(j)$ is the transmit power for the AP serving UE k in iteration j and Pmax is the maximum transmit power allowed for the AP. Four iterations are used and the best user weight set and the corresponding transmission precoding vectors are found according to equation (1), where the k-th user rate is computed as

$$r_k(j) = \log_2(1 + \mu_k(j) * C_k(j))$$

where $C_k(j)$ is the optimum jointly-achievable SINR margin.

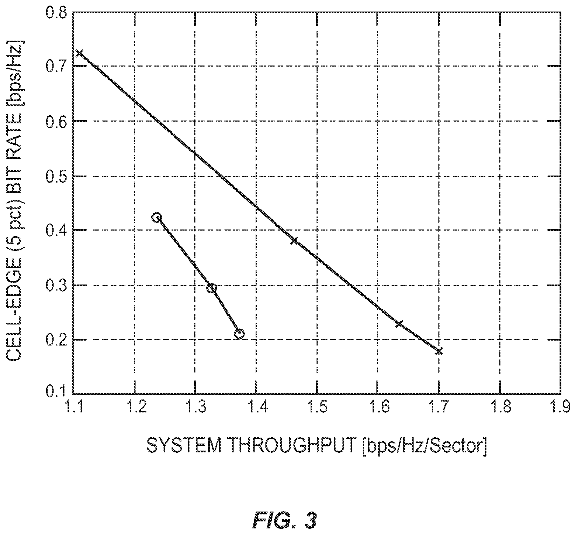

FIG. 3 depicts the system throughput versus the cell-edge (5 percentile) user throughput for multiuser beam-forming with and without rate allocation.

The present invention may, of course, be carried out in other ways than those specifically set forth herein without departing from the scope of the invention as defined by the appended claims.

## Claims

1. An iterative method of allocating data transmission rates to multiple users from multiple antennas (12a - 12c) in a wireless communication network (10), wherein said data transmission rates are allocated by varying transmission precoding vectors assigned to the users, comprising:

    initially assigning a weight to each user (22), the weight indicating a metric regarding a user channel condition and said metric being weighted to indicate the user's relative priority;
    determining a transmission precoding vector for each user, corresponding to the assigned weight (24);

determining the relative channel conditions associated with transmissions to each user using the determined transmission precoding vector (28);
adjusting the weight assigned to each user based on the associated channel conditions (30);
determining a transmission precoding vector for each user, corresponding to the adjusted weight (24); and
transmitting data to the users, using the latest determined transmission precoding vectors.

2. The method of claim 1 wherein the initial weight assignment is equal weights to all users.

3. The method of claim 1 further comprising iterating, one or more times, the steps of:

determining the relative channel conditions associated with transmissions to each user using the determined transmission precoding vector (28);
adjusting the weight assigned to each user based on the associated channel conditions (30); and
determining a transmission precoding vector for each user, corresponding to the adjusted weight (24).

4. The method of claim 3 wherein iterating one or more times comprises iterating a predetermined number of times.

5. The method of claim 3 wherein iterating one or more times comprises iterating until a predetermined metric meets a predetermined threshold.

6. The method of claim 1 wherein adjusting the weight assigned to each user based on the associated channel conditions (30) comprises increasing the weights assigned to users associated with high channel conditions compared to other users' channel conditions.

7. The method of claim 1 wherein adjusting the weight assigned to each user based on the associated channel conditions (30) comprises decreasing the weights assigned to users associated with low channel conditions compared to other users' channel conditions.

**Patentansprüche**

1. Iteratives Verfahren zur Zuweisung von Datenübertragungsraten an mehrere Nutzer von mehreren Antennen (12a-12c) in einem drahtlosen Kommunikationsnetzwerk (10), wobei die Datenübertragungsraten durch variierende Übertragungsvorcodierungsvektoren, die den Nutzern zugeordnet sind, zugewiesen werden, umfassend:

anfängliches Zuordnen eines Gewichts für jeden Nutzer (22),
wobei das Gewicht eine Metrik in Bezug auf einen Nutzerkanalzustand angibt und die Metrik gewichtet wird, um die relative Priorität des Nutzers anzugeben;
Bestimmen eines Übertragungsvorcodierungsvektors für jeden Nutzer entsprechend dem zugeordneten Gewicht (24);
Bestimmen der relativen Kanalbedingungen, die mit Übertragungen an jeden Nutzer assoziiert werden, unter Verwendung des bestimmten Übertragungsvorcodierungsvektors (28) ;
Anpassen des jedem Nutzer zugeordneten Gewichts basierend auf den assoziierten Kanalbedingungen (30);
Bestimmen eines Übertragungsvorcodierungsvektors für jeden Nutzer entsprechend dem angepassten Gewicht (24); und
Übertragen von Daten an die Nutzer unter Verwendung der neuesten bestimmten Übertragungsvorcodierungsvektoren.

2. Verfahren nach Anspruch 1, wobei die anfängliche Gewichtszuordnung für alle Nutzer äquivalente Gewichte sind.

3. Verfahren nach Anspruch 1, weiter umfassend das einmalige oder mehrmalige Wiederholen der folgenden Schritte:

Bestimmen der relativen Kanalbedingungen, die mit Übertragungen an jeden Nutzer assoziiert werden, unter Verwendung des bestimmten Übertragungsvorcodierungsvektors (28) ;
Anpassen des jedem Nutzer zugeordneten Gewichts basierend auf den assoziierten Kanalbedingungen (30); und
Bestimmen eines Übertragungsvorcodierungsvektors für jeden Nutzer entsprechend dem angepassten Gewicht (24).

**4.** Verfahren nach Anspruch 3, wobei das einmalige oder mehrmalige Wiederholen das Wiederholen in einer festgelegten Anzahl umfasst.

**5.** Verfahren nach Anspruch 3, wobei das einmalige oder mehrmalige Wiederholen das Wiederholen, bis eine zuvor festgelegte Metrik eine zuvor festgelegte Schwelle erfüllt, umfasst.

**6.** Verfahren nach Anspruch 1, wobei das Anpassen des jedem Nutzer zugeordneten Gewichts basierend auf den assoziierten Kanalbedingungen (30) das Erhöhen der Nutzern zugeordneten Gewichte, die mit hohen Kanalbedingungen assoziiert werden, im Vergleich zu anderen Nutzerkanalbedingungen umfasst.

**7.** Verfahren nach Anspruch 1, wobei das Anpassen des jedem Nutzer zugeordneten Gewichts basierend auf den assoziierten Kanalbedingungen (30) das Reduzieren der Nutzern zugeordneten Gewichte, die mit niedrigen Kanalbedingungen assoziiert werden, im Vergleich zu anderen Nutzerkanalbedingungen umfasst.

## Revendications

**1.** Procédé répétitif d'allocation de débits de transmission de données à une pluralité d'utilisateurs à partir d'une pluralité d'antennes (12a - 12c) dans un réseau de communication sans fil (10), dans lequel lesdits débits de transmission de données sont alloués en faisant varier des vecteurs de précodage de transmission attribués aux utilisateurs, comprenant :

l'attribution initiale d'un poids à chaque utilisateur (22), le poids indiquant une métrique relative à une condition de voie d'utilisateur et ladite métrique étant pondérée pour indiquer la priorité relative de l'utilisateur ;
la détermination d'un vecteur de précodage de transmission pour chaque utilisateur, correspondant au poids (24) attribué ;
la détermination des conditions de voie relatives associées à des transmissions à chaque utilisateur à l'aide du vecteur de précodage de transmission déterminé (28) ;
l'ajustement du poids attribué à chaque utilisateur sur la base des conditions de voie associées (30) ;
la détermination d'un vecteur de précodage de transmission pour chaque utilisateur, correspondant au poids (24) ajusté ; et
la transmission de données aux utilisateurs, à l'aide des tout derniers vecteurs de précodage de transmission déterminés.

**2.** Procédé selon la revendication 1, dans lequel l'attribution de poids initiale consiste en des poids égaux pour tous les utilisateurs.

**3.** Procédé selon la revendication 1, comprenant en outre la répétition, une ou plusieurs fois, des étapes consistant à :

déterminer les conditions de voie relatives associées à des transmissions à chaque utilisateur à l'aide du vecteur de précodage de transmission déterminé (28) ;
ajuster le poids attribué à chaque utilisateur sur la base des conditions de voie associées (30) ; et
déterminer un vecteur de précodage de transmission pour chaque utilisateur, correspondant au poids (24) ajusté.

**4.** Procédé selon la revendication 3, dans lequel la répétition une ou plusieurs fois comprend la répétition un nombre de fois prédéterminé.

**5.** Procédé selon la revendication 3, dans lequel la répétition une ou plusieurs fois comprend la répétition jusqu'à ce qu'une métrique prédéterminée atteigne un seuil prédéterminé.

**6.** Procédé selon la revendication 1, dans lequel l'ajustement du poids attribué à chaque utilisateur sur la base des conditions de voie associées (30) comprend l'augmentation des poids attribués aux utilisateurs associés à des conditions de voie élevées par rapport à d'autres conditions de voie d'utilisateurs.

**7.** Procédé selon la revendication 1, dans lequel l'ajustement du poids attribué à chaque utilisateur sur la base des conditions de voie associées (30) comprend la réduction des poids attribués aux utilisateurs associés à des conditions de voie basses par rapport à d'autres conditions de voie d'utilisateurs.

FIG. 1

20

22
INITIALIZE AND ASSIGN USER WEIGHTS

24
DETERMINE TRANSMISSION PRECODING VECTOR
FOR EACH USER CORRESPONDING
TO THE ASSIGNED WEIGHT

26
ACCEPTABLE
RATE ALLOCATION
OR
MAX NUMBER
OF ITERATIONS?

32
TRANSMIT
USING BEST
USER WEIGHTS

YES

NO

28
DETERMINE THE RELATIVE CHANNEL CONDITIONS
ASSOCIATED WITH TRANSMISSIONS TO EACH USER
USING THE DETERMINED TRANSMISSION
PRECODING VECTOR

30
ADJUST THE WEIGHTS ASSIGNED
TO EACH USER BASED ON THE
ASSOCIATED CHANNEL CONDITIONS

FIG. 2

FIG. 3

## REFERENCES CITED IN THE DESCRIPTION

### Patent documents cited in the description

- US 61094108 A, A. Hafeez
- US 20100056140 A1
- EP 1863248 A1
- US 20080159122 A1
- US 20090296650 A1
- US 20070218950 A
- EP 1508992 A2
- US 20090253380 A1

### Non-patent literature cited in the description

- **M. SCHUBERT ; H. BOCHE.** Solution of the multi-user beamforming problem with individual SINR constraints. *IEEE Trans. VT,* January 2004, vol. 53 (1
- **G. J. FOSCHINI ; K. KARAKAYALI ; R. A. VALEN-ZUELA.** Coordinating multiple antenna cellular networks to achieve enormous spectral efficiency. *IEE Proc.-Commun.,* August 2006, vol. 153 (4), 548-555
- Coordinated multipoint transmission/reception. *TSG-RAN WG1 #53bis, R1-082469,* 30 June 2008
- **SEAN A. RAMPRASHAD ; GIUSEPPE CAIRE.** *Cellular vs. Network MIMO: A Comparison including the Channel State Information Overhead*
- Physical layer aspects for evolved Universal Terrestrial Radio Access (UTRA). *3GPP TR 25.814,* September 2006